# EUROPEAN PATENT SPECIFICATION

(11) **EP 0 478 490 B1**
(45) Date of publication and mention of the grant of the patent: **27.03.1996**
(21) Application number: 91500107.7
(22) Date of filing: 27.09.1991
(51) Int. Cl.: B60N 2/28

(54) **Tiltable child's seat**
Neigbarer Kindersitz
Siège réglable pour enfant

(30) Priority: 28.09.1990 ES 9002470
(43) Date of publication of application: 01.04.1992
(73) Proprietor: PLAY, S.A., E-08026 Barcelona (ES)
(72) Inventor: Jane Launes, Joaquin, E-08009 Barcelona (ES)
(74) Representative: Pastells Teixido, Manuel

(56) References cited:
- EP-A- 0 424 303
- BE-A- 763 181
- DE-A- 2 133 206
- DE-A- 2 650 182
- GB-A- 2 159 401
- US-A- 4 215 900

## Description

This invention relates to a tiltable child's seating unit.

Several types of child's seats for this purpose are known fixed by belts to the rear seat ot the motor vehicles, these child's seats comprising a base frame and the seat as such being related to said frame by a mechanism determining and locking the selected seat tilting.

In the European patent specification EP-0 424 303 of the same applicant, this mechanism essentially comprises two paralleled transverse shafts respectively fitted below the seat's front side and between the base frame's side members, these two shafts being associated together by two telescopic columns which in their greater or lesser extent are determining whether the seat is more or less tilted,the seat being pivoted by its rear sides at points placed at the respective upper and rear extensions of the base frame sides. The locking means of the extensions in the telescopic columns are formed by a lever pivoted between the outer members of said two columns, which lever is provided at one of the ends thereof with two pins selectively inserted in the orifices provided along the associated inner members of the two telescopic columns, which lever is pushed by resilient means towards its active locking position.

The object of the present invention is to simplify the arrangement of this locking mechanism by further providing it with dampening means and other means to facilitate the noiseless sliding between the two metal members of the telescopic column.

To this end, one of the two telescopic columns has been suppressed and the two transverse shafts are associated to a single central telescopic column sufficiently rugged and strong, the pivoted lever being fitted on the column outer member, this lever being provided at one of its ends with the pin selectively inserted in the orifices of the inner member of the telescopic column.

The upper transverse shaft is fixed to the seat by means of resilient bushings with a dampening function and between the telescopic column's inner member and outer member is arranged a selflubricating bushing for a perfect sliding between said two members.

These and other features will be better understood from the following detailed description, to facilitate which there is attached a drawing sheet in which a practical embodiment only by way of a non-exhaustive example of the scope of the invention has been shown.

In the drawings:

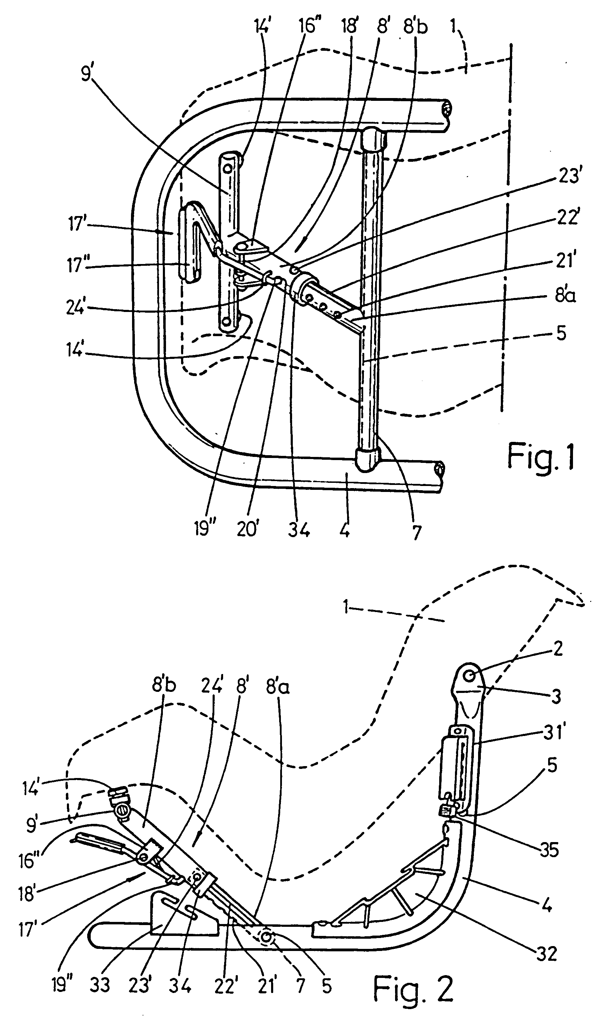

Figure 1 is a perspective view of the front portion of the seat seen from below, and
Figure 2 is a side view of the seat.

According to such figures, the child's seat comprises an integral unit 1 constituting the seat as such, being the seat pivoted at its lateral points 2 with the ends 3 of a U-shaped tubular base frame 4 showing two transverse shafts 5 between its side members.

The transverse shaft 5 of the base frame is inserted in a freely rotatable tubular sheath 7 to which the inner member 8'a of a telescopic column 8' is centrally fixed, being the outer member 8'b fixedly attached to a transverse tube 9'paralleled to the former tubular sheath 7 and fixed by its ends below the lower front portion of the seat by means of two resilient bushings 14' performing as dampers.

On the outer member 8'b of the telescopic column, two lugs 16'' are fixedly attached between which is being pivoted a locking and unlocking lever 17' for the positions of the seat 1, the lever arranged with a straight rod is fixedly attached to a shaft 18' playing on respective perforations of said lugs 16'', this rod is terminated at one end in a pin 19'' which is inserted in an orifice 20' of the outer member 8'b and selectively penetrates in one of several orifices 21' provided along the inner member 8'a of the telescopic column.

This member longitudinally comprises an inlaid slit or slot 22′ wherein the inner end of a rivet 23′ fixed to the outer member 8′b plays therein and is performing as abutment to prevent any uncoupling in the extension of the telescopic members.

Between these two members 8′a and 8′b is arranged a selflubricating bushing 14,such as nylon to determine the perfect adjustment between said members and its smooth and noiseless sliding.

The locking of the several positions of the seat 1 by operation of the lever 17′ ending in a control handle 17˝ is ensured by one spring 24′ coiled to the shaft 18′,being the extended ends of the spring respectively applied against the front portion of the lever 17′ and against the member 8′b as such.

Although this mechanism is formed by metal members,it can also be manufactured with components of suitable plastic material,thereby simplifying still further its arrangement.

The references 31′,32 and 33 show guide members for the safety belts which will hold the child's seat on the front or rear seat of the automobile. The guide member 31′ forms a single-piece clamp which in its opening is provided with the locking catch 35 pivoted between the clamp branches.

The present invention,within its essentiality can practically be carried out in other ways of embodiment differing only in detail from the one disclosed herein by way of example only, and to which other embodiments the protection sought herein will also be extended.

## Claims

1. A tiltable child's seating unit, comprising:
- a frame (4) comprising side members providing a base portion and a back portion extending upwardly from said base portion, a first transverse shaft (5) extending between the side members of said base portion;
- a seat (1) pivotally connected to the back portion of said frame, a second transverse shaft (9') being connected to a lower front portion of said seat (1);
- a telescopic adjusting mechanism (8', 17') connected between said first and second transverse shafts (5, 9') for selectively adjusting the tilting position of the seat (1),
**characterised in that,**
said telescopic adjusting mechanism comprises a single telescopic column consisting of an inner member (8'a) and an outer member (8'b) and a locking mechanism comprising a pivotal locking lever assembly (17') attached to said outer member (8'b), one of the ends of said pivotal locking lever comprising a pin insertable into orifices provided along said inner member (8'a), and in that the upper transverse shaft (9') is fixed to the seat (1) by means of resilient bushings (14').

2. A tiltable child's seating unit, according to claim 1, characterized in that between the inner member (8'a) and the outer member (8'b) of the telescopic column is arranged a selflubricating bushing (34) to facilitate the noiseless sliding between said two members.

## Patentansprüche

1. Eine kippbare Kindersitzeinheit, bestehend aus:
- einem Rahmen (4) einschliesslich Seitenteilen, welche ein Grundteil und ein Rückteil darstellen, welches Letztere sich vom genanntem Grundteil nach oben ausdehnt, sowie eine erste Querstange (5), welche sich zwischen den Seitenteilen des genannten Grundteiles ausdehnt;
- einem Sitz (1) welcher schwenkbar am Rückteil des genannten Rahmens angelenkt ist, eine zweite Querstange (9') welche am niedrigen Frontteil des genannten Sitzes (1) angelenkt ist;
- ein teleskopisch einstellbarer Mechanismus (8', 17') welcher sich zwischen der ersten und zweiten Querstange (5, 9') angelenkt ist, um wahlweise die Kippstellung des Sitzes (1) einzustellen,
dadurch **gekennzeichnet**
dass die genannte teleskopische Einstellmechanik eine einzige Teleskopsäule beinhaltet, welche aus einem inneren Glied (8'a) und einem ausseren Glied (8'b) sowie aus einer Schliessmechanik besteht, welche aus einem schwenkbaren Schliesshebel (17') besteht, welcher an dem genannten äusseren Glied (8'b) befestigt ist, wobei eines der Enden des genannten schwenkbaren Schliesshebels einen Stift beinhaltet, welcher in Oeffnungen eingesteckt werden kann, welche längs des genannten inneren Gliedes (8'a) angebracht sind, und dadurch, dass die höhere Querstange (9') an dem Sitz (1) durch elastische Muffen (14') befestigt ist.

2. Eine kippbare Kindersitzeinheit, gem. Patentanspruch 1, dadurch gekennzeichnet, dass zwischen dem inneren Glied (8'a) und dem äusseren Glied (8'b) der Teleskopsäule eine selbstschmierende Buchse (34) angeordnet ist, um das geräuschlose Gleiten der beiden oben genannten Glieder aufeinander zu erleichtern.

## Revendications

1. Système de siège inclinable pour enfants comprenant ce qui suit:
- un bâti (4) comportant des éléments latéraux qui constituent une section de base et une section arrière, se prolongeant vers le haut depuis cette section de base et un premier axe transversal (5) qui s'étend entre les éléments latéraux de cette section de base;
- un siège (1) relié de manière articulée a la section arrière de ce bâti, un second axe transversal (9') étant relié à la section avant inférieure de ce siège (1);
- un mécanisme de réglage télescopique (8',17') intercalé entre ces premier et second axes tranversaux (5,9') qui permet de régler le siège (1) à la position inclinée désirée.
caractérisé par les aspects suivants:
ce mécanisme a réglage télescopique comprend une colonne télescopique unique se composant d'un élément interne (8'a) et d'un élément externe (8'b) ainsi que d'un mécanisme de fixation qui comporte un système de levier de fixation articulé (17') relié à l'élément externe (8'b), l'une des extrémités de ce levier de fixation articulé comportant une goupille qui s'introduit dans l'un des orifices prévus le long de l'élément interne (8'a), l'axe transversal supérieur (9') étant fixé au siège (1) par des douilles souples (14').

2. Système de siège inclinable pour enfants, conformément a la revendication 1, caractérisé par le fait qu'entre l'élément interne (8'a) et l'élément externe (8'b) de la colonne télescopique se trouve une douille (34) de matériau auto-lubrifiant qui facilite le déplacement silencieux de ces deux éléments entre eux.
